# EUROPÄISCHE PATENTANMELDUNG

(11) **EP 1 460 500 A1**
(43) Veröffentlichungstag der Anmeldung: **22.09.2004**
(21) Anmeldenummer: 03005921.6
(22) Anmeldetag: 17.03.2003
(51) Int. Cl.: G05B 19/4093

(54) **Anzeige eines Programmiersystems einer Werkzeugmaschine**

(71) Anmelder: TRUMPF Werkzeugmaschinen GmbH + Co. KG, 71254 Ditzingen (DE)
(72) Erfinder: Bauer, Klaus, 71254 Ditzingen (DE); Schmid, Hans-Jörg, 70839 Gerlingen (DE); Hohenadel, Jürgen, 70199 Stuttgard (DE); Holder, Erwin, 72574 Bad Urach (DE); Lausterer, Stephan, 72793 Pfullingen (DE); Deuter, Stefan, 90439 Nürnberg (DE); Richter, Winfried, 72631 Aichtal-Götzingen (DE)
(74) Vertreter: KOHLER SCHMID + PARTNER

(57) **Zusammenfassung**

Eine Anzeige eines Programmiersystems einer Werkzeugmaschine, insbesondere einer umformenden Werkzeugmaschine, zur Erstellung eines Einzelbearbeitungsprogramms anhand von Eingabedaten und gespeicherten Maschinendaten umfasst einen Anzeigebereich (1), in dem die zur Bearbeitung erforderlichen Funktionen (B₁-B₃, ...), welche aus den Eingabe- und Maschinendaten berechnet werden, angezeigt und dabei in ihre unterschiedlichen Prozessschritte (A-H) gruppiert sind.

## Beschreibung

Die vorliegende Erfindung betrifft eine Anzeige eines Programmiersystems einer Werkzeugmaschine, insbesondere einer umformenden Werkzeugmaschine, zur Erstellung eines Einzelbearbeitungsprogramms anhand von Eingabedaten und gespeicherten Maschinendaten.

Aufgabe der vorliegenden Erfindung ist es, die zur Bearbeitung erforderlichen Funktionen möglichst übersichtlich darzustellen.

Diese Aufgabe wird erfindungsgemäß dadurch gelöst, dass die Anzeige einen Anzeigebereich aufweist, in dem die zur Bearbeitung erforderlichen Funktionen, welche aus den Eingabe- und Maschinendaten berechnet werden, angezeigt und dabei in ihre unterschiedlichen Prozessschritte gruppiert sind.

Die erfindungsgemäße Anzeige hat den Vorteil, dass die vom Programmiersystem anhand der Eingabe- und Maschinendaten generierten Funktionen in einzelne Prozessschritte strukturiert und angezeigt sind. Dadurch wird das Auffinden einer bestimmten Funktion im Bearbeitungsablauf, z.B. bei einer Biegemaschine das Auffinden der Funktion "Biegen" der dritten Biegung eines Biegeteils, deutlich erleichtert.

Vorzugsweise sind die angezeigten Funktionen in den Prozessschritt"Beladen", in die Prozessschritte "Bearbeitungsschritte" und in den Prozessschritt "Entladen" gruppiert. Im Fall einer Rohrbiegemaschine sind als Prozessschritte abwechselnd Positionier- und Biegeprozessschritte vorgesehen, wobei jeder Positionierprozessschritt Funktionen wie z.B. "Entspannen", "Freifahren" und "Arbeitsposition anfahren" oder Kombinationen davon und jeder Biegeprozessschritt Funktionen wie z.B. "Spannen", "Biegen" und "Gleitschiene zurückstellen" aufweist. Im Fall einer Stanzmaschine sind als Prozessschritte "Werkzeugwechsel" und im Fall einer Laserbearbeitungsmaschine als Prozessschritte das An- und Ausschalten des Laserstrahls gruppiert.

Bei einer bevorzugten Ausführungsform der Erfindung sind die im Anzeigebereich angezeigten Prozessschritte und/oder Funktionen, insbesondere durch Ändern, Entfernen, Hinzufügen oder Neuerstellen, bearbeitbar. Das Ändern eines im Anzeigebereich angezeigten Prozessschrittes und/oder einer im Anzeigebereich angezeigten Funktion kann beispielsweise dadurch erfolgen, dass Parameter der Funktion im Anzeigebereich angezeigt werden und vom Bediener geändert werden können.

In vorteilhafter Weiterbildung dieser Ausführungsform weist der Anzeigebereich ein Auswahlmenü zur Bearbeitung der angezeigten Funktionen auf. Ein solches Auswahlmenü umfasst insbesondere die Menüpunkte "Funktion löschen" und "Funktion einfügen", wobei im letzteren Fall vom Bediener eine neue Funktion, deren Parameter als Maschinencode (NC-Code) definierbar ist, eingefügt werden kann.

Des weiteren kann auch ein Menüpunkt "Makro erzeugen" vorhanden sein, um eine neue Funktion durch Kombination bereits vorgesehener Funktionen zu definieren.

Bei bevorzugten Ausführungsformen der Erfindung ist zu jeder Funktion, insbesondere auch zu jedem Prozessschritt, ein Statusfeld angezeigt, das entsprechend der Durchführbarkeit der Funktion gesetzt ist. Nachdem die Funktionen berechnet sind, werden sie auf ihre Durchführbarkeit überprüft, und das Ergebnis der Überprüfung wird im Statusfeld angezeigt. Damit der Bediener diese Überprüfung jederzeit, insbesondere nach Eingabe neuer oder geänderter Daten, durchführen lassen kann, kann der Anzeigebereich einen entsprechenden Button zum Starten der Durchführbarkeitsprüfung aufweisen.

Bevorzugt sind im Anzeigebereich gleichzeitig die Prozessschritte, die Funktionen mindestens eines Prozessschrittes und Parameter mindestens einer Funktion des mindestens einen Prozessschrittes angezeigt.

Vorzugsweise bilden die angezeigten Prozessschritte ein Menü zur Auswahl desjenigen Prozessschrittes, dessen Funktionen angezeigt werden sollen, und bilden die angezeigten Funktionen des ausgewählten Prozessschrittes ein Menü zur Auswahl derjenigen Funktion, deren Parameter angezeigt werden sollen. Die Auswahl kann bedienerfreundlich mittels eines Touchscreens oder alternativ mit Keyboard und Maus erfolgen. Selbstverständlich können bei Bedarf noch weitere Untermenüs zwischengeschaltet sein.

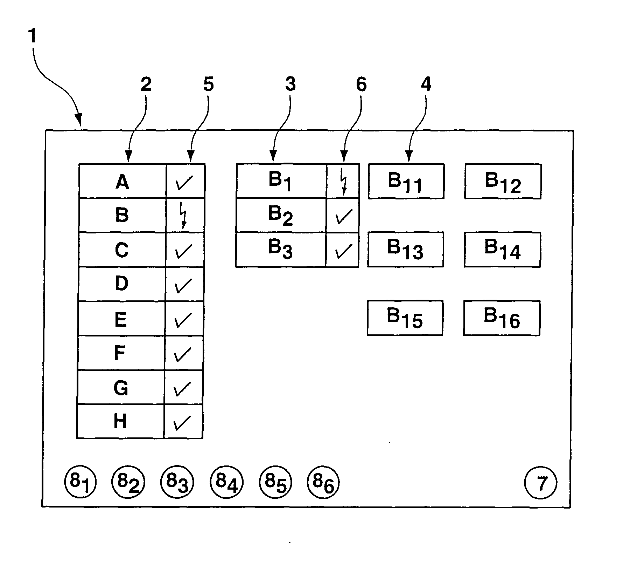

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die einzige Figur zeigt die erfindungsgemäße Anzeige eines Programmiersystems einer Werkzeugmaschine zur Erstellung eines Maschinencode-Einzelbearbeitungsprogramms.

Die erfindungsgemäße Anzeige umfasst einen Anzeigebereich **1**, in dem die zur Bearbeitung erforderlichen Funktionen, welche aus Eingabedaten und Maschinendaten berechnet werden, angezeigt und dabei in ihre unterschiedlichen Prozessschritte gruppiert sind.

Dazu weist der Anzeigebereich 1 ein erstes Anzeigefeld 2 auf, in dem beispielhaft acht Prozessschritte **A** bis **H** chronologisch aufgelistet sind. Der erste Prozessschritt A ist üblicherweise das Beladen der Werkzeugmaschine mit einem Werkstück und der letzte Prozessschritt H üblicherweise das Entladen der Werkzeugmaschine. Die aufgelisteten Prozessschritte A bis H bilden gleichzeitig ein Menü zur Auswahl eines der aufgelisteten Prozessschritte. Im gezeigten Ausführungsbeispiel ist der zweite Prozessschritt B ausgewählt, der in nicht dargestellter Weise im Menü entsprechend markiert ist.

Im zweiten Anzeigefeld 3 sind die berechneten Funktionen des im ersten Anzeigefeld 2 ausgewählten Prozessschrittes chronologisch aufgelistet, also im gezeigten Ausführungsbeispiel die beispielhaft drei Funktionen **B**_{**1**} bis **B**_{**3**} des ausgewählten zweiten Prozessschrittes B. Die aufgelisteten Funktionen B₁ bis B₃ bilden gleichzeitig ein Menü zur Auswahl einer der aufgelisteten Funktionen. Im gezeigten Ausführungsbeispiel ist die erste Funktion B₁ ausgewählt, die in nicht dargestellter Weise im Menü entsprechend markiert ist.

Im dritten Anzeigefeld 4 sind Parameterwerte der im zweiten Anzeigefeld 3 ausgewählten Funktion aufgelistet, also im gezeigten Ausführungsbeispiel die drei Parameterwerte **B**_{**11**} bis **B**_{**16**} der ausgewählten Funktion B₁.

Bei einer umformenden Werkzeugmaschine, z.B. einer Rohrbiegemaschine, sind die einzelnen Prozessschritte: (A) Beladen, (B) erster Positioniervorgang, (C) erster Biegevorgang, ..., (F) dritter Positioniervorgang, (G) dritter Biegevorgang und (H) Entladen. Die einzelnen Funktionen des Prozessschrittes "Positionieren" sind insbesondere "Entspannen", "Freifahren" und "Arbeitsposition anfahren" oder Kombinationen davon. Die einzelnen Funktionen des Prozessschrittes "Biegen" sind insbesondere "Spannen", Biegen", "Gleitschiene zurückstellen" und "Biegen" oder Kombinationen davon. Parameter der Funktion "Freifahren" sind insbesondere Angabe von Positionen, Geschwindigkeiten der Maschinenachsen und des Biegekopfes. Parameter der Funktion "Biegen" sind insbesondere Biegeradius, - winkel, -geschwindigkeit und Beschleunigung sowie Verweilzeit, Rückbiegen, Dornvorauslösung und Dornrückzugposition.

Im ersten und zweiten Anzeigefeld 2, 3 wird die Durchführbarkeit jedes Prozessschrittes und jeder angezeigten Funktion in einem zugeordneten Statusfeld **5, 6** angezeigt. Im gezeigten Ausführungsbeispiel sind nur die Funktion B₁ und daher auch der zugehörige Prozessschritt B nicht durchführbar, so dass im Statusfeld 5, 6 eine entsprechende Fehlermeldung angezeigt ist. Wenn der Bediener z.B. die angezeigten Parameter der nicht durchführbaren Funktion geändert hat, kann die Durchführbarkeitsprüfung durch Betätigen eines Buttons 7 erneut gestartet werden.

Bei einer bevorzugten Ausführungsform der Erfindung sind die im Anzeigebereich angezeigten Funktionen, insbesondere durch Ändern, Entfernen, Hinzufügen oder Neuerstellen, bearbeitbar. Das Ändern einer im Anzeigebereich angezeigten Funktion kann beispielsweise dadurch erfolgen, dass Parameter der Funktion im Anzeigebereich angezeigt werden und vom Bediener geändert werden können.

Am unteren Rand weist der Anzeigebereich 1 ein Auswahlmenü **8** zur Bearbeitung der angezeigten Funktionen auf. Im gezeigten Ausführungsbeispiel umfasst dieses Auswahlmenü 8 beispielhaft sechs Menüpunkte **8**_{**1**} bis **8**_{**6**}, nämlich "Funktion einfügen", "Funktion löschen", "Funktion kopieren/verschieben", "Funktion importieren", "Funktion exportieren" und "Makro erzeugen.

Anders als im gezeigten Ausführungsbeispiel können Parameter auch direkt den Prozessschritten zugeordnet und damit den Funktionen eines Prozessschrittes übergeordnet sein.

## Patentansprüche

1. Anzeige eines Programmiersystems einer Werkzeugmaschine, insbesondere einer umformenden Werkzeugmaschine, zur Erstellung eines Einzelbearbeitungsprogramms anhand von Eingabedaten und gespeicherten Maschinendaten, mit einem Anzeigebereich (1), in dem die zur Bearbeitung erforderlichen Funktionen (B₁-B₃, ...), welche aus den Eingabe- und Maschinendaten berechnet werden, angezeigt und dabei in ihre unterschiedlichen Prozessschritte (A-H) gruppiert sind.

2. Anzeige nach Anspruch 1, **dadurch gekennzeichnet, dass** die angezeigten Funktionen (B₁-B₃, ...) in den Prozessschritt "Beladen" (A), in die Prozessschritte "Bearbeitungsschritte" (B-G) und in den Prozessschritt "Entladen" (H) gruppiert sind.

3. Anzeige nach Anspruch 1 oder 2, **dadurch gekennzeichnet, dass** die im Anzeigebereich (1) angezeigten Prozessschritte (A-H) und/oder Funktionen (B₁-B₃, ...), insbesondere durch Ändern, Entfernen, Hinzufügen oder Neuerstellen, bearbeitbar sind.

4. Anzeige nach Anspruch 3, **dadurch gekennzeichnet, dass** Parameter (B₁₁-B₁₆, ...) eines im Anzeigebereich (1) angezeigten Prozessschrittes und/oder einer im Anzeigebereich (1) angezeigten Funktion (B₁, B₂, B₃, ...) im Anzeigebereich (1) angezeigt und veränderbar sind.

5. Anzeige nach einem der vorhergehenden Ansprüche, **dadurch gekennzeichnet, dass** der Anzeigebereich (1) ein Auswahlmenü (8) zur Bearbeitung der angezeigten Funktionen (B₁-B₃, ...) aufweist.

6. Anzeige nach einem der vorhergehenden Ansprüche, **dadurch gekennzeichnet, dass** zu jeder Funktion (B₁, B₂, B₃, ...), insbesondere auch zu jedem Prozessschritt (A-H), ein Statusfeld (5, 6) angezeigt ist, das entsprechend der Durchführbarkeit der Funktion gesetzt ist.

7. Anzeige nach Anspruch 6, **dadurch gekennzeichnet, dass** der Anzeigebereich (1) einen Button (7) zum Starten der Durchführbarkeitsprüfung aufweist.

8. Anzeige nach einem der vorhergehenden Ansprüche, **dadurch gekennzeichnet, dass** im Anzeigebereich (1) gleichzeitig die Prozessschritte (A-H), die Funktionen (B₁-B₃, ...) mindestens eines Prozessschrittes (B, ...) und Parameter (B₁₁-B₁₆, ...) mindestens einer Funktion (B₁, ...) des mindestens einen Prozessschrittes (B₁, ...) angezeigt sind.

9. Anzeige nach Anspruch 8, **dadurch gekennzeichnet**, **dadurch gekennzeichnet, dass** die angezeigten Prozessschritte (A-H) ein Menü zur Auswahl desjenigen Prozessschrittes bilden, dessen Funktionen angezeigt werden sollen, und dass die angezeigten Funktionen des ausgewählten Prozessschrittes ein Menü zur Auswahl derjenigen Funktion bilden, deren Parameter angezeigt werden sollen.
